Europäisches Patentamt

European Patent Office

Office européen des brevets

(19)

(11) Veröffentlichungsnummer: **0 234 602**
**B1**

# (12) EUROPÄISCHE PATENTSCHRIFT

(45) Veröffentlichungstag der Patentschrift:
**31.05.89**

(51) Int. Cl.⁴: **F 16 C 33/20**

(21) Anmeldenummer: **87200003.9**

(22) Anmeldetag: **03.01.87**

(54) Gleitlagerwerkstoff.

(30) Priorität: **21.01.86 DE 3601568**

(43) Veröffentlichungstag der Anmeldung:
**02.09.87 Patentblatt 87/36**

(45) Bekanntmachung des Hinweises auf die Patenterteilung:
**31.05.89 Patentblatt 89/22**

(84) Benannte Vertragsstaaten:
**AT DE ES FR GB IT NL SE**

(56) Entgegenhaltungen:
**EP-A-0 040 448**
**FR-A-2 102 887**

(73) Patentinhaber: **KOLBENSCHMIDT**
**Aktiengesellschaft, Karl- Schmidt- Strasse 8/12**
**Postfach 1351, D-7107 Neckarsulm (DE)**

(72) Erfinder: **Braus, Jürgen, Johann- Jakob- Astor-**
**Strasse 53, D-6909 Walldorf (DE)**
Erfinder: **Baureis, Hans- Paul, Höhenweg 5, D-6909**
**Dielheim, Horrenberg (DE)**
Erfinder: **Bickle, Wolfgang, Friedenstrasse 15,**
**D-6831 Reilingen (DE)**

(74) Vertreter: **Rieger, Harald, Dr., Reuterweg 14,**
**D-6000 Frankfurt am Main (DE)**

## Beschreibung

Die Erfindung betrifft einen folienartigen Gleitlagerwerkstoff, aufgebaut aus einem aus einer Aluminium-Knetlegierung mit einer Bruchdehnung von $\delta_5 = 8$ bis 20 % und einer Brinellhärte HB 35 bis 65 bestehenden Streckmetall von 0,3 bis 0,9 mm Dicke, das mit einer Matrix aus 5 bis 25 Vol.-% Blei, 10 bis 50 Vol.-% Glasfasern und 40 bis 80 Vol.-% Polytetrafluoräthylen (PTFE) in der Weise beschichtet ist, daß die rautenförmigen Durchbrechungen des Streckmetalls mit der Matrix gefüllt sind und über dem Streckmetall eine Reib- bzw. Gleitschicht der Matrix von 0,01 bis 0,3 mm Dicke vorhanden ist.

Ein folienartiger in der EP-A-0 040 448 beschriebener Gleitlagerwerkstoff besteht aus einem mit einem Fluorpolymer beschichteten Streckmetallgitter aus einer Aluminium-Knetlegierung mit einer Bruchdehnung $\delta_5 = 8$ bis 20 % und einer Brinellhärte HB 35 bis 65, das mit einem Gemisch aus 5 bis 25 Vol.-% Blei, 10 bis 50 Vol.-% Glasfasern und 40 bis 80 Vol.-% Polytetrafluoräthylen bestehenden Beschichtung beschichtet ist. Dieser Gleitlagerwerkstoff erlaubt beliebige Schnitte und Stanzungen, ohne daß sich Teile des Streckmetalls beim Stanzen oder Schneiden, bei der späteren Verarbeitung oder bei der Verwendung lösen können. Darüber hinaus besitzt dieser Gleitlagerwerkstoff eine vergleichsweise hohe Formstabilität, so daß er bei der Montage unbehindert automatisch in Lagerbuchsen und Lagerschalen eingelegt werden kann. Falls die auf den Stegen des Streckmetalls befindliche Reib- bzw. Gleitschicht abgetragen ist, besitzt das Streckmetall selbst sehr gute Notlaufeigenschaften.

Dieser wartungsfreie Gleitlagerwerkstoff wird im wesentlichen in solche Lagerbuchsen und Lagerschalen eingelegt, in denen keine hydrodynamische Schmierung vorhanden ist, so daß mit einem stetig fortschreitenden Verschleiß, trotz der Zusätze von das Reib- bzw. Gleitverhalten beeinflussenden Stoffen, wie Blei und Glasfasern, gerechnet werden muß. Darüber hinaus begrenzt die Anwesenheit von Blei in der Reib- bzw. Gleitschicht den Einsatz des Gleitlagerwerkstoffs, da dieser für Anwendungen in Maschinen, insbesondere der Pharmazeutischen und Lebensmittelindustrie, nicht geeignet ist.

Der Erfindung liegt die Aufgabe zugrunde, bei dem eingangs beschriebenen folienartigen Gleitlagerwerkstoff die Verschleißfestigkeit der die Reib- bzw. Gleitschicht bildenden Matrix zu verbessern und damit die Lebensdauer bzw. Gebrauchsdauer des vorzugsweise in Lagerbuchsen bzw. Lagerschalen eingelegten Gleitlagerwerkstoffs zu erhöhen, ohne daß seine übrigen Eigenschaften verschlechtert werden. Ebenso soll der Anwendungsbereich des Gleitlagerwerkstoffs erweitert werden.

Diese Aufgabe wird erfindungsgemäß dadurch gelöst, daß die Matrix Zinksulfid oder Bariumsulfat mit einer Korngröße von 0,1 bis 1,0 µm mit einer mittleren Korngröße von 0,3 µm in einer Menge von 10 bis 50 Vol.-% enthält. Durch die Verwendung des ausgesprochen feinteiligen Zinksulfids bzw. Bariumsulfats wird das Verschleißverhalten der Reib- bzw. Gleitschicht des folienartigen Gleitlagerwerkstoffs deutlich verbessert, so daß die Gebrauchsdauer um bis zu 30 % erhöht wird. Die anderen mechanischtechnologischen Eigenschaften des Gleitlagerwerkstoffs werden in keiner Weise dadurch beeinträchtigt.

Die Zinksulfidteilchen können nach einem weiteren Merkmal der Erfindung noch 1 bis 5 Vol.-% Bariumsulfat und gf. noch 0,05 bis 0,5 Vol.-% Zinkoxid enthalten.

Zur Verbesserung des Verschleißwiderstandes und der statischen Belastbarkeit kann die Matrix noch 1,5 bis 15 Vol.-% Aramidfasern mit einem Durchmesser von 0,02 bis 0,1 mm und einer Länge von; 0,3 mm enthalten. Im Rahmen der weiteren Ausgestaltung der Erfindung besitzen die Glasfasern, die vorzugsweise zu 15 bis 35 Vol.-% in der Matrix enthalten sind, eine Länge von 0,1 bis 0,5 mm und einen Durchmesser von 0,02 bis 0,1 mm.

Nach einem vorzugsweisen Merkmal des erfindungsgemäß ausgebildeten Gleitlagerwerkstoffs werden als Aluminium-Knetlegierung die Typen AlMgSil oder AlMg3 eingesetzt, die ein ausgesprochen gutes Notlaufverhalten aufweisen.

Die hohe Formstabilität sowie die gute Haftfestigkeit der Matrix auf dem Streckmetallgitter ist dadurch erreicht, daß die Maschenweite des Streckmetallgitters 0,5 x 1,0 bis 2,0 x 3,0 mm, vorzugsweise 1,0 x 2,0 mm und die Stegbreite 0,3 bis 1,0 mm, vorzugsweise 0,5 mm, betragen.

Eine besonders vorteilhafte Ausführungsform des erfindungsgemäß ausgebildeten folienartigen Gleitlagerwerkstoffs besteht darin, daß die die Reib- bzw. Gleitschicht bildende Matrix aus einem Gemisch von 56 Vol.-% PTFE mit einer Korngröße von > 3 bis < 10 µm, 16 Vol.-% Glasfasern mit einem Durchmesser von ≤ 20 µm und einer Länge von ≤ 150 µm, 9 Vol.-% Aramidfasern mit einer Länge von ≤ 300 µm und einem Durchmesser von ≤ 12 µm und 19 Vol.-% Zinksulfid mit einer Korngröße von ≤ 1,0 µm besteht.

Das feinteilige Zinksulfid bzw. Bariumsulfat führt zu einem ausgesprochen hohen Verteilungsgrad in der Matrix. Bedingt dadurch wird sowohl der Verschleiß der Reib- bzw. Gleitschicht deutlich gesenkt, als auch mechanische Ermüdungsrisse in der Matrix vermieden. Das gilt auch bei sehr hohen Verarbeitungstemperaturen, so daß die guten Eigenschaften des PTFE voll erhalten bleiben. Da sich zinksulfid und Bariumsulfat antikorrosiv verhalten, unterbleibt ein korrosiver Angriff auf den Gleitpartner.

Zur besseren Haftung der Matrix auf dem Streckmetallgitter wird dieses mit einer 2 bis 10 µm dicken Schicht eines Haftvermittlers beschichtet. Der flüssige Haftvermittler besteht aus 100 Gew.-Teilen einer PTFE-Dispersion, 20 Gew.-Teilen Chromphosphat und 45 Gew.-Teilen destilliertem Wasser.

Der Gleitlagerwerkstoff wird in der Weise hergestellt, daß auf das entfettete Streckmetall die Haftvermittlerflüssigkeit aufgetragen und getrocknet wird. Anschließend wird das die Matrix bildende Gemisch auf das Streckmetall aufgestreut, aufgewalzt, getrocknet, gesintert und abschließend die Reib- bzw. Gleitschicht kalibriert.

Die Erfindung ist in der Zeichnung beispielhaft dargestellt und wird nachfolgend näher erläutert:

Für das Streckmetall wurde eine Aluminium-Knetlegierung des Typs AlMg3 verwendet, mit einer Zugfestigkeit $\delta_b$ = 180 N/mm², 0,2-Grenze $\delta_{0,2}$ = 80 N/mm², einer Bruchdehnung $\delta_5$ = 17 % und einer Brinellhärte von HB = 45 verwendet. Die Maschenweite betrug 1 x 2 mm und die Stegbreite 0,5 mm. Das Streckmetall wurde mit einer Matrix der Zusammensetzung 19 Vol.-% Zinksulfidpulver, 16 Vol.-% Glasfasern, 9 Vol.-% Aramidfasern und 56 % PTFE beschichtet.

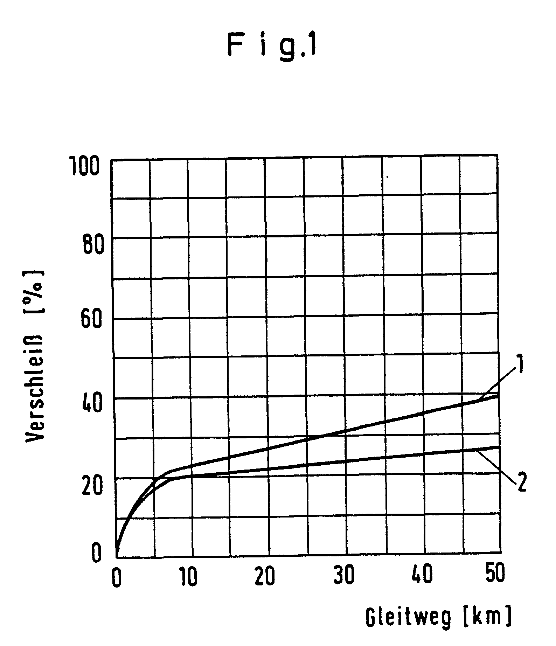

Das in Fig.1 wiedergegebene Diagramm der Abhängigkeit des Verschleißes vom Gleitweg zeigt, daß der erfindungsgemäße folienartige Gleitlagerwerkstoff (Kurve 1) einen um ca. 25 % geringeren Verschleiß besitzt gegenüber dem Verschleiß eines herkömmlichen folienartigen Gleitlagerwerkstoffs (Kurve 2), bei dem das Streckmetall mit einer Matrix aus 10 % Bleipulver, 30 % Glasfasern und 60 % PTFE beschichtet ist.

In Fig. 2 ist eine Draufsicht auf ein mit der Matrix (1) beschichtetes Streckmetall (2) wiedergegeben, wobei die Stege (3) gestrichelt angedeutet und die Maschenlänge des Streckmetallgitters mit L und die Maschenbreite mit b angegeben sind.

In Fig. 3 ist ein Querschnitt entlang der Schnittlinie I - I der Fig. 2 dargestellt, wobei die Dicke der Reib- bzw. Gleitschicht (1) über dem Streckmetall (2) mit s, die Dicke des Streckmetall (2) mit a angegeben sind.

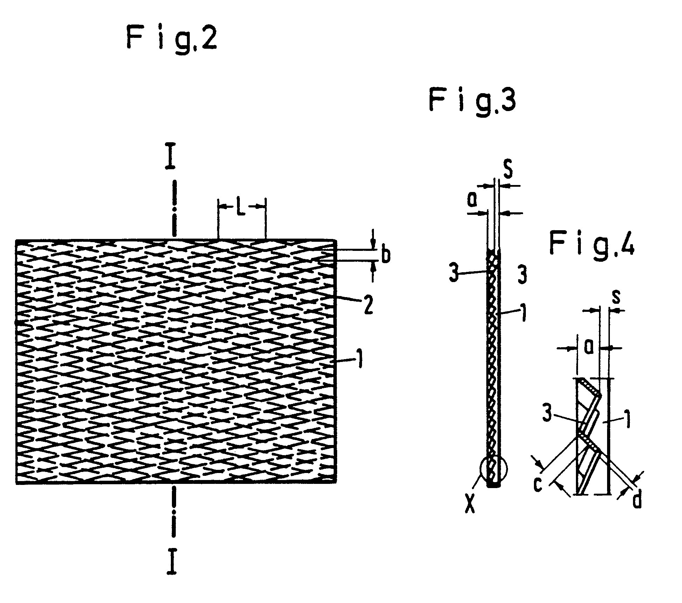

Eine ausschnittsweise vergrößerte Darstellung X der Fig. 3 ist in Fig. 4 dargestellt, wobei die Stegbreite mit c und die Stegdicke mit d eingezeichnet sind.

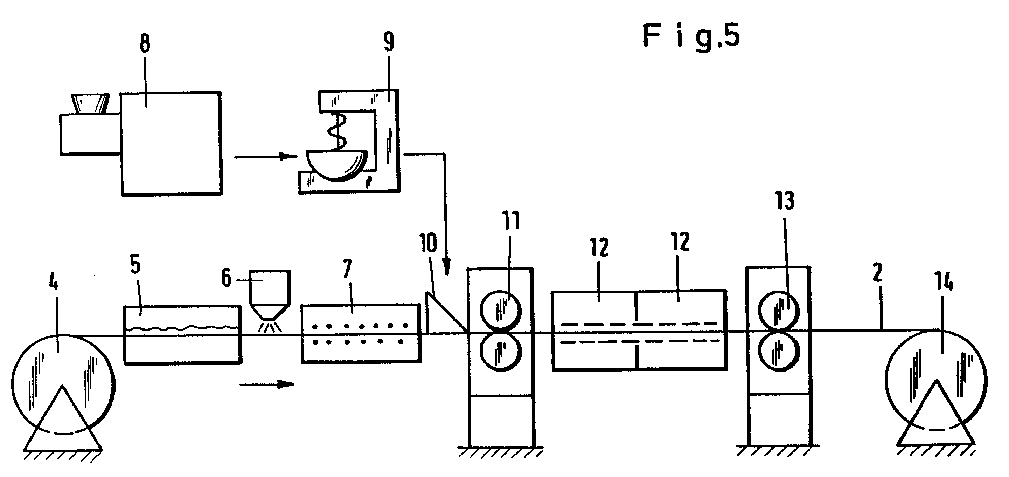

Fig. 5 zeigt die Herstellung des erfindungsgemäßen Gleitlagerwerkstoffs im Durchlaufverfahren. Das bandförmige, von der Trommel (4) abgewickelte Streckmetall (2) wird in der Vorrichtung (5) entfettet und unter der Sprühvorrichtung (6) mit dem in der Heizvorrichtung (7) getrockneten Haftvermittler beschichtet. Die in den Mischvorrichtungen (8),(9) erzeugte Matrixmaterial wird über die Streuvorrichtung (10) auf das Streckmetall (2) aufgestreut, in der Walzvorrichtung (11) auf das Streckmetall aufgewalzt und in der Heizvorrichtung (12) zunächst getrocknet und dann gesintert. Abschließend wird die Matrix mit Hilfe der Walzvorrichtung (13) kalibriert und das fertige Gleitlagerwerkstoffband auf die Trommel (4) aufgewickelt.

**Patentansprüche**

1. Folienartiger Gleitlagerwerkstoff, aufgebaut aus einem aus einer Aluminium-Knetlegierung mit einer Bruchdehnung $\delta_5$ = 8 bis 20 % und einer Brinellhärte HB 35 bis 65 bestehenden gitterförmigen Streckmetall von 0,3 bis 0,9 mm Dicke mit rautenförmige Durchbrechungen, das mit einer Matrix aus 5 bis 25 Vol.-% Blei, 10 bis 50 Vol.-% Glasfasern und 40 bis 80 Vol.-% PTFE in der Weise beschichtet ist, daß die rautenförmigen Durchbrechungen des Streckmetalls mit der Matrix gefüllt sind und über dem Streckmetall eine Reib- bzw. Gleitschicht der Matrix von 0,01 bis 0,3 mm Dicke vorhanden ist und die Matrix (1) Zinksulfid oder Bariumsulfat mit einer Korngröße von 0,1 bis 1,0 µm mit einer mittleren Korngröße von 0,3 µm in einer Menge von 10 bis 50 Vol.-% enthält.

2. Gleitlagerwerkstoff nach Anspruch 1, dadurch gekennzeichnet, daß die Zinksulfidteilchen noch 1 bis 5 Vol.-% Bariumsulfat und gf. noch 0,05 bis 0,5 Vol.-% Zinkoxid enthalten.

3. Gleitlagerwerkstoff nach den Ansprüchen 1 und/oder 2, dadurch gekennzeichnet, daß die Matrix (1) 1,5 bis 15 Vol.-% Aramidfasern mit einem Durchmesser von 0,02 bis 0,1 mm und einer Länge von ≤ 0,3 mm enthält.

4. Gleitlagerwerkstoff nach einem oder mehreren der Ansprüche 1 bis 3, dadurch gekennzeichnet, daß die Glasfasern eine Länge von 0,1 bis 0,5 mm und einen Durchmesser von 0,02 bis 0,1 mm aufweisen und vorzugsweise in einer Menge von 15 bis 35 Vol.-% in der Matrix (1) enthalten sind.

5. Gleitlagerwerkstoff nach den Ansprüchen 1 bis 4, dadurch gekennzeichnet, daß das Streckmetall (2) aus einer Aluminium-Knetlegierung des Typs AlMgSil oder AlMg3 besteht.

6. Gleitlagerwerkstoff nach einem oder mehreren der Ansprüche 1 bis 5, dadurch gekennzeichnet, daß die Maschenweite (b x L) des Streckmetallgitters 0,5 x 1,0 bis 2,0 x 3,0 mm, vorzugsweise 1,0 x 2,0 mm, und die Stegbreite (c) 0,3 bis 1,0 mm, vorzugsweise 0,5 mm, betragen.

7. Gleitlagerwerkstoff nach einem oder mehreren der Ansprüche 1 bis 6, dadurch gekennzeichnet, daß das Streckmetall (2) mit einer 2 bis 10 µm dicken Schicht eines Haftvermittlers beschichtet ist.

8. Gleitlagerwerkstoff nach einem oder mehreren der Ansprüche 1 bis 7, dadurch gekennzeichnet, daß die Matrix (1) aus einem Gemisch von 56 Vol.-% PTFE mit einer Korngröße von > 3 bis < 10 µm, 16 Vol.-% Glasfasern mit einem Durchmesser von ≤ 20 µm und einer Länge von ≤ 50 µm, 9 Vol.-% Aramidfasern mit einem Durchmesser von ≤ 12 µm und einer

Länge vom $\leqslant$ 300 μm und 19 Vol.-% Zinksulfid mit einer Korngröße von $\leqslant$ 1,0 μm besteht.

9. Verfahren zur Herstellung des Gleitlagerwerkstoffs nach Anspruch 1, aufgebaut aus einem aus einer Aluminium-Knetlegierung mit einer Bruchdehnung $\delta_5$ = 8 bis 20 % und einer Brinellhärte HB 35 bis 65 bestehenden gitterförmigen Streckmetall von 0,3 bis 0,9 mm Dicke mit rautenförmigen Durchbrechungen, das mit einer Matrix aus 5 bis 25 Vol.-% Blei, 10 bis 50 Vol.-% Glasfasern und 40 bis 80 Vol.-% PTFE in der Weise beschichtet ist, daß die rautenförmigen Durchbrechungen des Streckmetalls mit der Matrix gefüllt sind und über dem Streckmetall eine Reib- bzw. Gleitschicht der Matrix von 0,01 bis 0,3 mm Dicke vorhanden ist und die Matrix (1) Zinksulfid oder Bariumsulfat mit einer Korngröße von 0,1 bis 1,0 μm mit einer mittleren Korngröße von 0,3 μm in einer Menge von 10 bis 50 Vol.-% enthält, wobei auf das entfettete Streckmetallgitter der flüssige Haftvermittler aufgegeben und getrocknet wird, dann die die Reib- bzw. Gleitschicht bildende Matrix auf das Streckmetallgitter aufgestreut, aufgewalzt, getrocknet, gesintert und abschließend die Reib- bzw. Gleitschicht kalibriert wird.

**Claims**

1. Sheet sliding bearing material, constructed from a grid-like expanded metal 0.3 to 0.9 mm thick with diamond-shaped openings and consisting of a wrought aluminium alloy having an elongation at break of $\delta_5$ = 8 to 20 % and a Brinell hardness of HB 35 to 65, which metal is coated with a matrix of 5 to 25 % volume lead, 10 to 50 % volume glass fibres and 40 to 80 % volume PTFE in such a way that the diamond-shaped openings in the expanded metal are filled with the matrix and there is a friction or sliding layer of the matrix 0.01 to 0.3 mm thick over the expanded metal, and the matrix (1) contains zinc sulphide or barium sulphate having a grain size of 0.1 to 1.0 μm with an average grain size of 0.3 μm in a quantity of 10 to 50 % volume.

2. Sliding bearing material according to Claim 1, characterised in that the zinc sulphide particles also contain 1 to 5 % volume barium sulphate and optionally also 0.05 to 0.5 % volume zinc oxide.

3. Sliding bearing material according to Claims 1 and/or 2, characterised in that the matrix (1) contains 1.5 to 15 % volume aramide fibres having a diameter of 0.02 to 0.1 mm and a length of $\leqslant$ 0.3 mm.

4. Sliding bearing material according to one or more of Claims 1 to 3, characterised in that the glass fibres have a length of 0.1 to 0.5 mm and a diameter of 0.02 to 0.1 mm and are preferably contained in the matrix (1) in a quantity of 15 to 35 % volume.

5. Sliding bearing material according to claims 1 to 4, characterised in that the expanded metal (2) consists of a wrought aluminium alloy of the type AlMgSil or AlMg3.

6. Sliding bearing material according to one or more of claims 1 to 5, characterised in that the mesh size (b x L) of the expanded metal grid is 0.5 x 1.0 to 2.0 x 3.0 mm, preferably 1.0 x 2.0 mm, and the land width (c) is 0.3 to 1.0 mm, preferably 0.5 mm.

7. Sliding bearing material according to one or more of Claims 1 to 6, characterised in that the expanded metal (2) is coated with a 2 to 10 μm thick primer layer.

8. Sliding bearing material according to one or more of Claims 1 to 7, characterised in that the matrix (1) consists of a mixture of 56 % volume PTFE having a grain size of > 3 to < 10 μm, 16 % volume glass fibres having a diameter of $\leqslant$ 20 μm and a length of $\leqslant$ 150 μm, 9 % volume aramide fibres having a diameter of $\leqslant$ 12 μm and a length of $\leqslant$ 300 μm and 19 % volume zinc sulphide having a grain size of $\leqslant$ 1.0 μm.

9. Process for producing the sliding bearing material according to Claim 1, constructed from a gridlike expanded metal 0.3 to 0. 9 mm thick with diamondshaped openings and consisting of a wrought aluminium alloy having an elongation at break of $\delta_5$ = 8 to 20 % and a Brinell hardness of HB 35 to 65, which metal is coated with a matrix of 5 to 25 % volume lead, 10 to 50 % volume glass fibres and 40 to 80 % volume PTFE in such a way that the diamond-shaped openings in the expanded metal are filled with the matrix and there is a friction or sliding layer of the matrix 0.01 to 0.3 mm thick over the expanded metal, and the matrix (1) contains zinc sulphide or barium sulphate having a grain size of 0.1 to 1.0 μm with an average grain size of 0.3 μm in a quantity of 10 to 50 % volume whereby the liquid primer is put onto the de-greased expanded metal grid and dried, then the matrix forming the friction or sliding layer is scattered and rolled onto the expanded metal grid, is dried, sintered and finally the friction or sliding layer is calibrated.

**Revendications**

1. Matériau pour palier lisse, de type en feuille, formé d'un métal déployé en forme de grille d'une épaisseur de 0,3 à 0,9 mm, avant des mailles en forme de losange, et constitué d'un alliage forgeable à base d'aluminium, ayant un allongement à la rupture $\delta_5$ compris entre 8 et 20 % et une dureté Brinell HB comprise entre, 35 et 65 qui est revêtu d'une matrice constituée de 5 à 25 % en volume de plomb, de 10 à 50 % en volume de fibres de verre et de 40 à 80 % en volume de polytétrafluoroéthylène, de façon que les mailles en forme de losange du métal déployé soient emplies de la matrice, et qu'il y ait, sur le métal déployé, une couche de friction ou de glissement de la matrice de 0,01 à 0,3 mm d'épaisseur et la matrice (1) contient du sulfure de zinc ou du sulfate de baryum en une granulométrie de 0,1 à 1,0 micron avec une granulométrie moyenne de 0,3 micron, en une quantité de 10 à 50 % en volume.

2. Matériau pour palier lisse suivant la revendication 1, caractérisé en ce que les particules de sulfure de zinc contiennent de 1 à 5 % en volume de sulfate de baryum et, le cas échéant, de 0,05 à 0,5 % en volume d'oxyde de zinc.

3. Matériau pour palier lisse suivant les revendications 1 et/ou 2, caractérisé en ce que la matrice (1) contient de 1,5 à 15 % en volume de fibres d'aramide ayant un diamètre de 0,02 à 0,1 mm et une longueur inférieure ou égale à 0,3 mm.

4. Matériau pour palier lisse suivant l'une ou plusieurs des revendications 1 à 3, caractérisé en ce que les fibres de verre ont une longueur de 0,1 à 0,5 mm et un diamètre de 0,02 à 0,1 mm et sont contenues dans la matrice de préférence en une quantité de 15 à 35 % en volume.

5. Matériau pour palier lisse suivant les revendications 1 à 4, caractérisé en ce que le métal déployé (2) est constitué d'un alliage forgeable à base d'aluminium du type AlMgSil ou AlMg3.

6. Matériau pour palier lisse suivant l'une ou plusieurs des revendications 1 à 5, caractérisé en ce que la dimension des mailles (b x L) de la grille en métal déployé est comprise entre 0,5 x 1,0 et 2,0 x 3,0 mm et, de préférence, est de 1,0 x 2,0 mm et la largeur (c) des parties pleines est comprise entre 0,3 et 1,0 mm et est, de préférence, égale à 0,5 mm.

7. Matériau pour palier lisse suivant l'une ou plusieurs des revendications 1 à 6, caractérisé en ce que le métal déployé (2) est revêtu d'une couche de 2 à 10 µm d'épaisseur d'un agent adhésif.

8. Matériau pour palier adhésif suivant l'une ou plusieurs des revendications 1 à 7, caractérisé en ce que la matrice (1) est constituée d'un mélange de 56 % en volume de polytétrafluoroéthylène d'une granulométrie comprise entre 3 et 10 microns, de 16 % en volume de fibres de verre ayant un diamètre inférieur ou égal à 20 microns et une longueur inférieure ou égale à 150 microns, de 9 % en volume de fibres d'aramide ayant un diamètre inférieur ou égal à 12 microns et une longueur inférieure ou égale à 300 microns, et de 19 % en volume de sulfure de zinc ayant une granulométrie inférieure ou égale à 1,0 micron.

9. Procédé de préparation d'un matériau pour palier lisse suivant la revendication 1, formé d'un métal déployé en forme de grille d'une épaisseur de 0,3 à 0,9 mm, ayant des mailles en forme de losange et constitué d'un alliage forgeable à base d'aluminium ayant un allongement à la rupture $\delta_5$ compris entre 8 et 20 % et une dureté Brinell HB comprise entre 35 et 65, qui est revêtu d'une matrice constituée de 5 à 25 % en volume de plomb, de 10 à 50 % en volume de fibres de verre et de 40 à 80 % en volume de polytétrafluoroéthylène, de façon que les mailles en forme de losange du métal déployé soient emplies de la matrice, et qu'il y ait, sur le métal déployé, une couche de friction ou de glissement de la matrice de 0,01 à 0,3 mm d'épaisseur et la matrice (1) contient du sulfure de zinc ou du sulfure de baryum en une granulométrie de 0,1 à 1,0 micron avec une granulométrie moyenne de 0,3 micron, en une quantité de 10 à 50 % en volume, qui consiste à déposer l'agent adhésif liquide sur la grille dégraissée en métal déployé et à le sécher, puis à appliquer sur la grille en métal déployé la matrice formant la couche de friction ou de glissement, à la laminer, à la sécher et à la fritter et, finalement, à calibrer la couche de friction et de glissement.

# F i g.1

Fig.2

Fig.3

Fig.4

Fig.5